# FASCICULE DE BREVET EUROPEEN

(11) **EP 2 349 821 B1**
(45) Date de publication et mention de la délivrance du brevet: **13.02.2013**
(21) Numéro de dépôt: 09795463.0
(22) Date de dépôt: 19.11.2009
(51) Int. Cl.: B62H 3/00, B62H 5/00, B62H 5/06

(54) **SYSTEME DE STOCKAGE ET DE VERROUILLAGE DE CYCLES**
ABSTELL- UND ABSPERRSYSTEM FÜR FAHRRÄDER
CYCLE STORAGE AND LOCKING SYSTEM

(30) Priorité: 24.11.2008 FR 0857966; 23.06.2009 FR 0954259
(43) Date de publication de la demande: 03.08.2011
(73) Titulaire: Smoove, 34198 Montpellier (FR)
(72) Inventeur: MERCAT, Jean-Pierre, F-74650 Chavanod (FR); MERCAT, Laurent, F-34980 Saint Gely du Fesc (FR); MERCAT, Denis, F-69110 Sainte Foy les Lyon (FR)
(74) Mandataire: Gasquet, Denis
(86) Numéro de dépôt international: PCT/FR2009/052216
(87) Numéro de publication internationale: WO 2010/058127

(56) Documents cités:
- EP-A- 1 698 749
- EP-A- 2 090 501
- DE-U1- 29 601 144
- DE-U1- 29 715 428
- FR-A- 2 719 015
- JP-U- 50 119 158
- US-A- 5 278 538

## Description

La présente invention , qui est revendiquée dans les revendications indépendantes 1 et 2, , qui est revendiquée dans les revendications indépendantes 1 et 2, concerne un système de stockage et de verrouillage de cycles, et plus particulièrement celui destiné à stocker et verrouiller des cycles destinés à être mis à la disposition du public autorisé, moyennant une procédure adaptée.

L'invention concerne donc le système constitué par un ensemble de postes de stockage, et un ensemble de cycles destinés à être stockés sur l'un ou l'autre des postes de stockage ou verrouillés hors poste de stockage. L'invention concerne aussi les moyens de gestion, ainsi que le dispositif antivol permettant à l'utilisateur de verrouiller le cycle emprunté hors de la station de stockage

L'invention se rapporte aussi aux cycles à assistance électrique en proposant un système de recharge de la batterie très simple et automatique, quand le cycle est sur son poste de stockage.

Les déplacements en ville sont devenus difficiles et coûteux compte tenu de la densité de circulation et des problèmes liés aux difficultés de stationnement, et le public voit dans le cycle un moyen pratique et peu coûteux de se déplacer.

L'usager peut posséder un vélo, mais le vélo partagé est une solution intéressante et aimée du public qui n'a pas à faire l'achat d'un vélo et qui s'affranchit ainsi des problèmes de stockage individuel. Le public peut dans certains cas être intéressé pour louer un vélo grâce à des loueurs spécialisés, mais cela suppose certaines contraintes. Ainsi, dans ce contexte la mise à disposition de cycles qui sont donc d'utilisation partagée, est organisée dans certaines villes. Les systèmes existants sont constitués par un ensemble de station de stockage, comprenant des potelets de verrouillage, lesquels potelets sont gérés par une borne de gestion située à proximité, qui permet à l'utilisateur de déverrouiller un vélo, et de le remettre en place dans l'un ou l'autre des postes de stockage.

On connaît déjà des systèmes de gestion de parc de cycles par exemple, par les demandes de brevet français, FR 2 824 942, FR 2 897 589, FR 2 897 588, européen EP 0 875 867 et internationale publiée sous le numéro WO/2005/001781. Mais ces systèmes ne sont pas totalement satisfaisants.

On connaît aussi par la divulgation faite par le brevet EP 2 090 501 , qui est un document pertinent pour l'article 54(3) CBE, un système de stockage et de verrouillage de cycles comportant des saillies disposées sur le cycle coopérant avec deux logements de verrouillage. Le brevet EP-A-1 698 749 , qui est l'état de la technique le plus proche, divulgue un système de stockage et de verrouillage de cycles dans lequel la roue est immobilisée et identifiée dans un élément fixé au sol à la façon d'un cadenas.

Pour l'utilisateur les systèmes existants ne sont pas totalement satisfaisants car les potelets de stockage sont bien souvent trop peu nombreux et les stations saturées obligeant ainsi à l'utilisateur d'aller à une station voisine pour tenter d'y rendre son vélo.

Pour l'exploitant les systèmes actuels sont très onéreux et la mise en place des potelets de stockage et de verrouillage n'est pas simple et nécessite un génie civil important, car chacun des potelets contient un système mécatronique onéreux qui doit être connecté à la borne de gestion, c'est le coût et cette complexité qui fait que l'exploitant ne peut multiplier le nombre de potelets pour éviter la saturation des stations.

De plus la sécurisation hors station de stockage n'est pas parfaite car gérée par un mécanisme indépendant et mal intégré.

L'invention propose un tout nouveau système particulièrement fiable et économique, dont la mise en oeuvre est grandement simplifiée. En effet, c'est grâce notamment à des moyens de stockage en station par des postes de stockage vierges de technologie et ne nécessitant pas de génie civil onéreux, que l'installation en est simplifiée.

Les cycles à assistance électrique rencontrent un vif succès en usage urbain car ils permettent à un très large public, pas particulièrement sportif, d'accéder aisément à la pratique du cycle particulièrement dans les villes ayant un relief accidenté, rendant ainsi l'usage du vélo beaucoup moins pénible. Il existe une forte demande potentielle de ce type de cycle à assistance électrique en usage locatif mais leur déploiement requiert, par leur coût et leur attrait supérieur, d'une part une sécurisation très élevée contre le vol et le vandalisme et d'autre part, un système automatique de la gestion de la charge de l'accumulateur électrique afin que l'usager n'ait pas à penser à gérer la charge lors de sa restitution afin que l'usager suivant soit sûr de louer un vélo suffisamment chargé.

L'invention propose donc un système permettant d'assurer automatiquement la charge de l'accumulateur des cycles à assistance électrique sans aucune intervention de l'usager.

D'autres caractéristiques et avantages de l'invention se dégageront de la description qui va suivre en regard des dessins annexés qui ne sont donnés qu'à titre d'exemples non limitatifs.
La figure 1 est une vue en perspective du système selon l'invention avec ses vélos, mis en place et verrouillés sur les postes de stockage correspondant, et la borne de gestion et de distribution des clés.
La figure 2 est une vue en perspective d'un poste de stockage, vu du coté de l'engagement de la roue avant du cycle.
La figure 3 est une vue de face du cycle verrouillé sur un poste de stockage.
La figure 4 est une vue latérale du cycle verrouillé sur un poste de stockage.
Les figures 5 et 5a sont des vues en perspective, qui représentent le retrait du cycle du poste de stockage.
Les figures 6 et 6a sont des vues en perspective, qui représentent la mise en place du cycle sur un poste de stockage.
Les figures 7, 7a, 7b, 7c, sont des vues illustrant la fourche avant du cycle de l'invention, avec son système de verrouillage en position active de verrouillage.
Les figures 7a, et 7b, sont des vues illustrant le cycle non verrouillé sur un poste de verrouillage.
Les figures 7c, 7d, sont des vues illustrant le cycle verrouillé sur un poste de stockage.
Les figures 8, 8a, sont des vues illustrant la fourche avant du cycle de l'invention, avec son système de verrouillage en position inactive de déverrouillage.
La figure 9 est une vue en perspective de détails montrant, comment se fait le verrouillage du cycle sur un poste de verrouillage.
La figure 10 est une vue en coupe horizontale faite au niveau des logements de verrouillage du poste de verrouillage, montrant plus particulièrement les rampes latérales de guidage.
La figure 11 est une vue partielle latérale montrant plus particulièrement le système de rampes, qui guide verticalement les portions tubulaires externes des douilles.
La figure 12 est une vue en perspective de la tête de fourche de l'invention avec arrachage partiel.
Les figures 13 à 16b sont des illustrations du système antivol qui permet de sécuriser le cycle hors station de stockage.

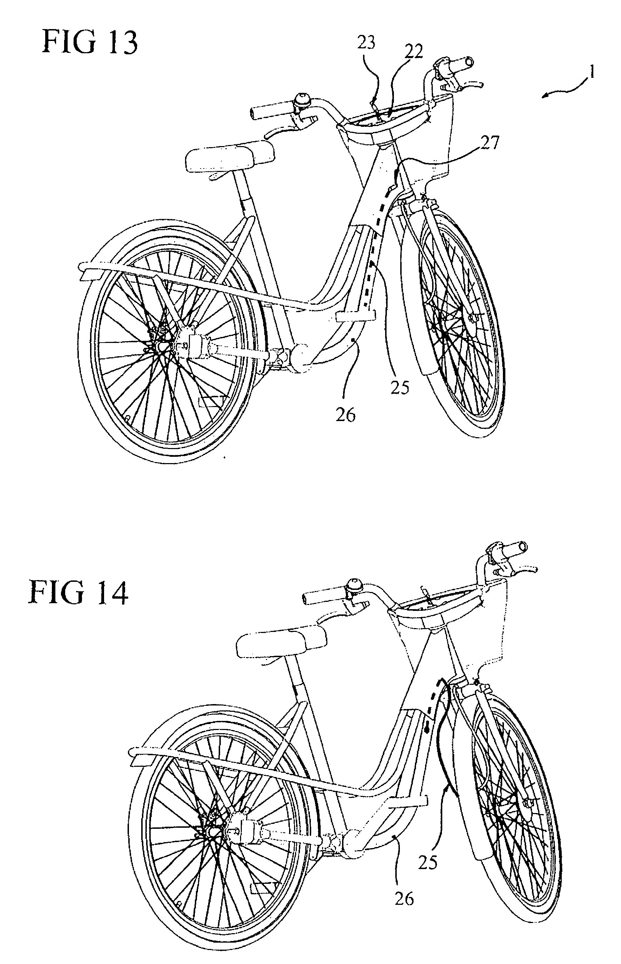

La figure 13 montre le cycle avec son antivol en position inactive.
La figure 14 illustre le cycle avec son antivol en position active de verrouillage hors station.

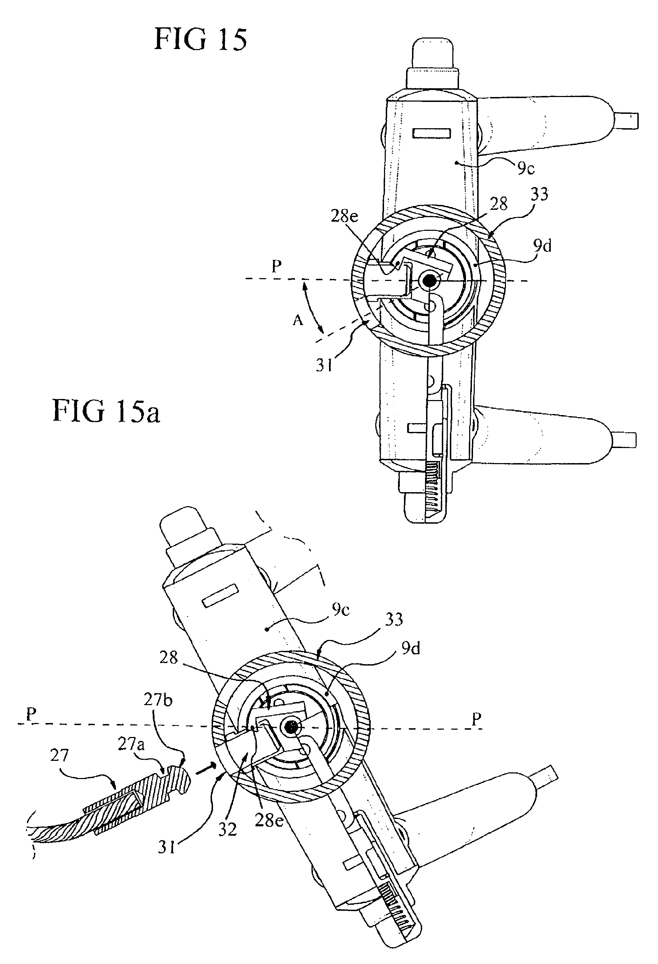

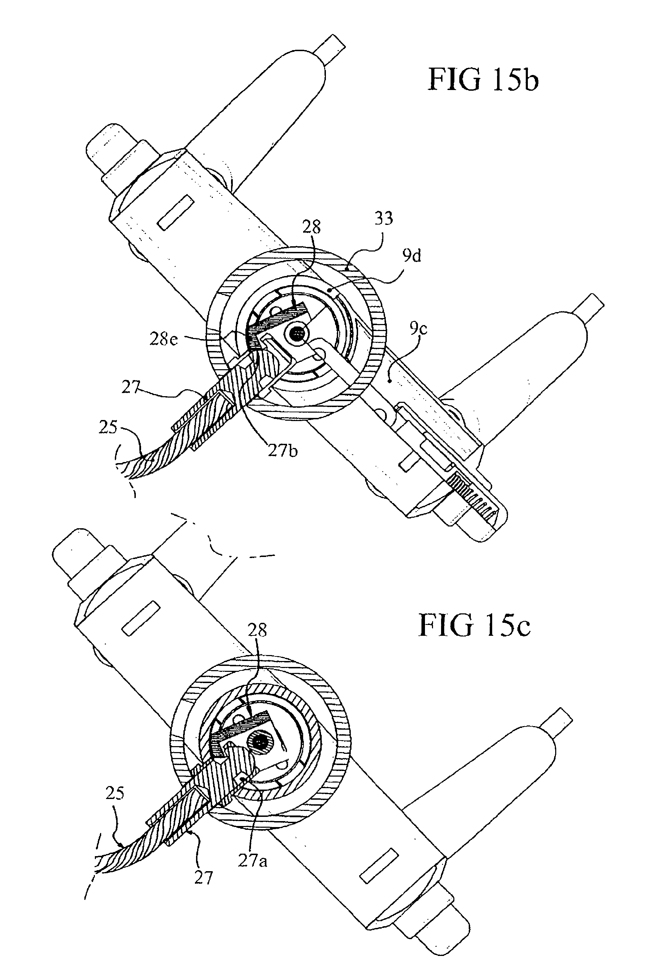

Les figures 15, 15a, 15b, 15c sont des vues en coupes horizontales faites au niveau du verrouillage de l'antivol, montrant les différentes étapes du verrouillage hors station de stockage.
La figure 15 est une vue illustrant la position centrée de la direction, position qui ne permet pas la mise en place de la broche de l'antivol.
La figure 15a, est une vue montrant le cycle, dans une position permettant la mise en place de la broche de l'antivol.
La figure 15b, est une vue montrant le cycle, dans une position d'engagement de la broche de l'antivol, et sollicitation à l'ouverture du verrou.
La figure 15c, est une vue montrant la position verrouillée.

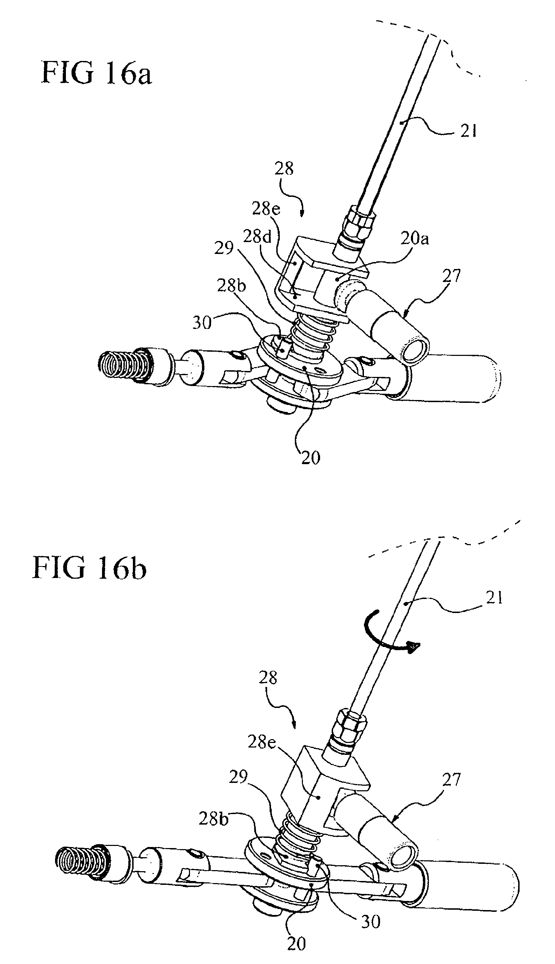

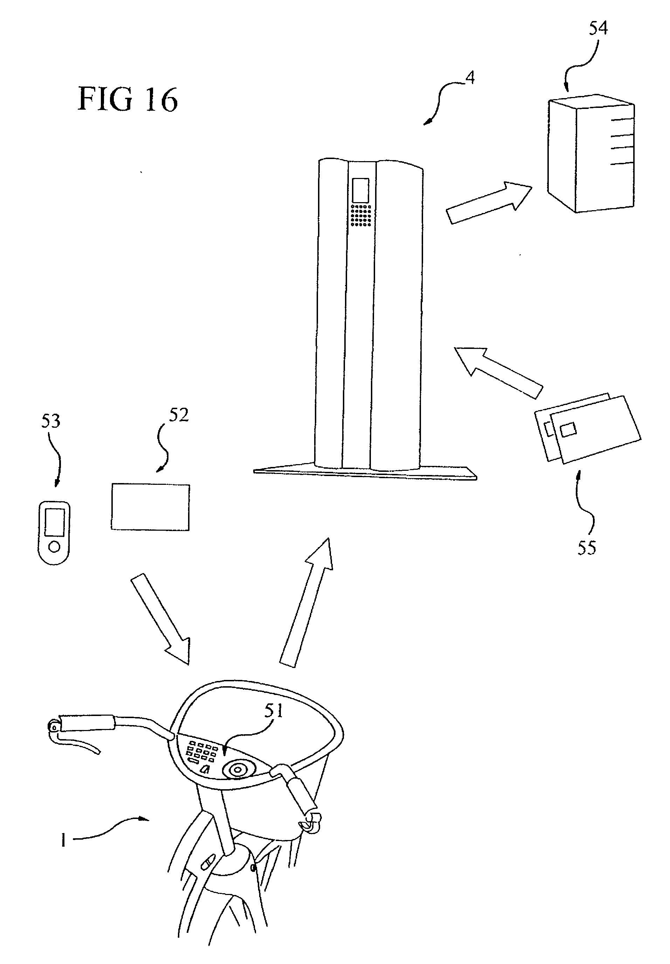

Les figures 16a et 16b sont des perspectives du mécanisme hors de la fourche montrant à la figure 16a, la position avant verrouillage de la broche de l'antivol, tandis que la figure 16b montre le mécanisme avec le verrouillage de la broche.
La figure 16 est une illustration schématique de gestion électronique.

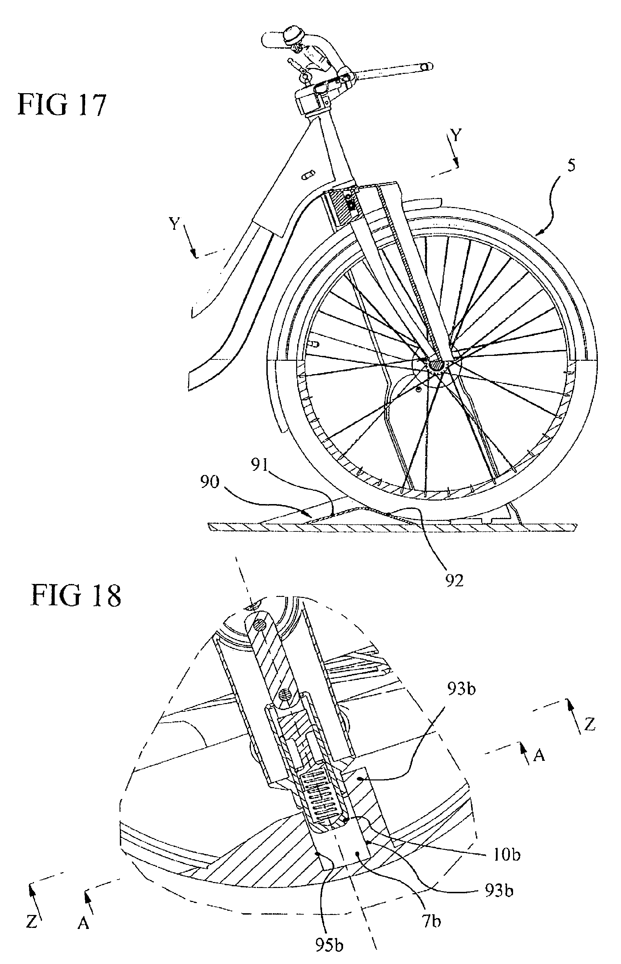

La figure 17 représente une vue en coupe décalée représentant un second mode de réalisation du poste de stockage, proposant un système de positionnement du vélo dans sa borne, assuré par la réaction de la roue avant sur une rampe inclinée par rapport au sol.
La figure 18 est une vue partielle en coupe YY de la figure 17, montrant le mécanisme de la fourche en position verrouillée avec les saillies mobiles de la fourche dans leur logement de verrouillage.

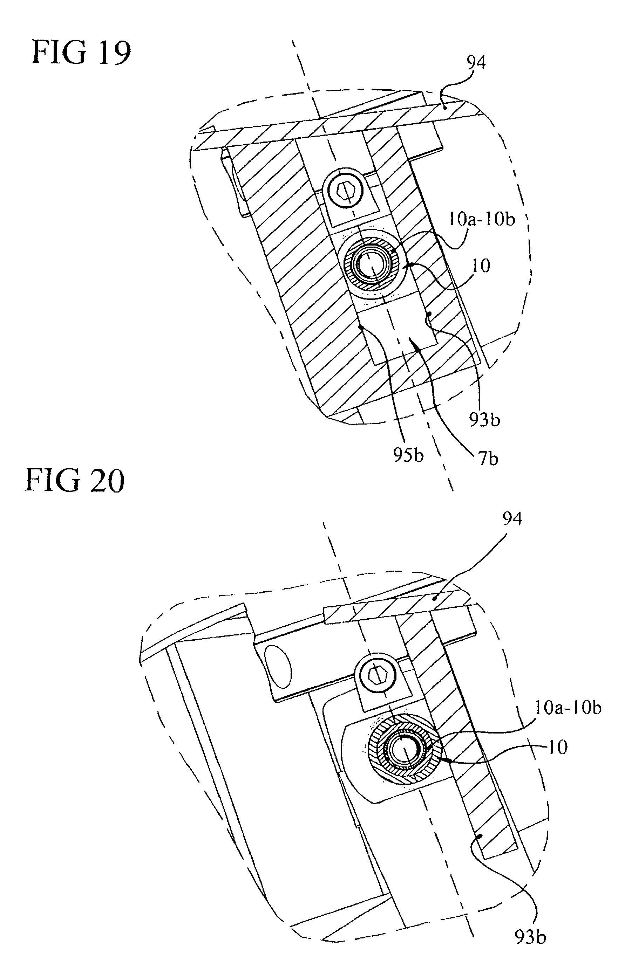

La figure 19 est une vue partielle en coupe ZZ de la figure 18, montrant les moyens de butées longitudinaux du cycle vers l'avant, assurés par l'appui des portions tubulaires externes des douilles de la fourche contre leur butée longitudinale sur le poste de verrouillage.
La figure 20 est une vue partielle en coupe AA de la figure 18, montrant plus particulièrement les moyens de verrouillage avec les saillies mobiles dans leur logement de verrouillage.

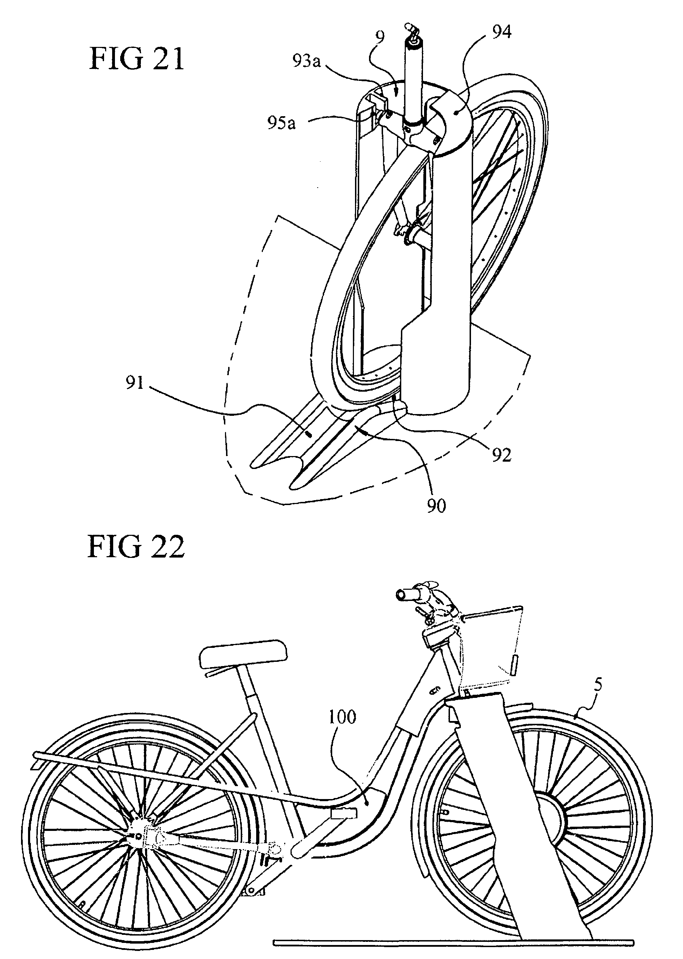

La figure 21 est une vue en perspective ¾ arrière de la figure 18 ou le vélo a été simplifié à la seule représentation de la fourche et de la roue avant et où le couvercle de la borne a été enlevé sur la moitié gauche afin de laisser apparaître le mécanisme de sécurisation.
La figure 22 est une vue latérale d'un cycle à assistance électrique sur sa borne de verrouillage en phase de recharge de l'accumulateur.

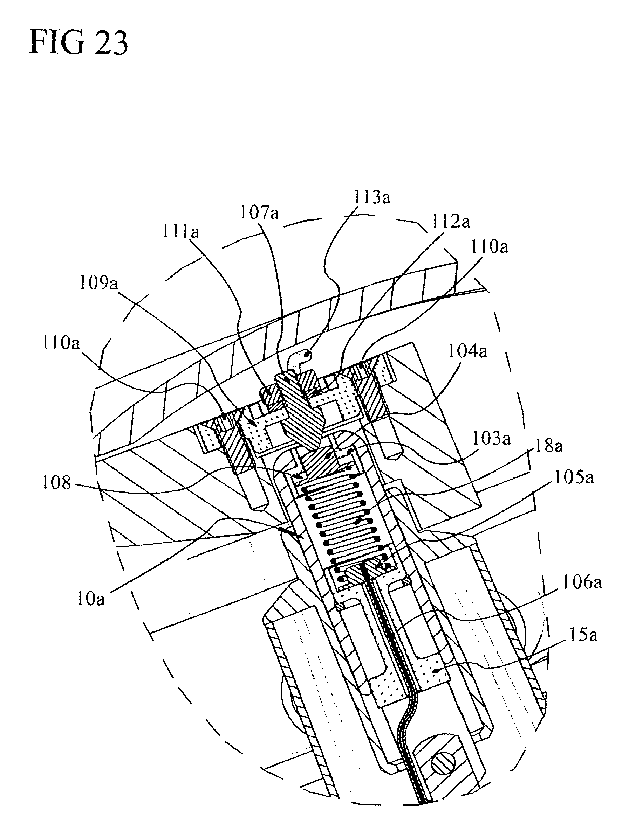

La figure 23 est une vue partielle en coupe de la figure 21, détaillant le système de connectique gauche destiné à assurer l'alimentation électrique nécessaire à la recharge de l'accumulateur.

Le système de stockage et de verrouillage de l'invention comprend plusieurs cycles (1) et au moins une station de stockage (2) comprenant plusieurs postes de stockage et de verrouillage (3), tandis que le système comprend des moyens de verrouillage de chacun des cycles sur l'un des postes de stockage et de verrouillage. Par ailleurs le système comprend une borne de gestion (4) disposée à proximité des postes de stockage (3).

Chacun des postes de stockage (3) est avantageusement constitué par deux bras (3a,3b) fixés au sol et s'étendant vers le haut avantageusement parallèlement pour former entre eux un espace (E) dans lequel la roue avant (5) du cycle (1) est destinée à y être introduite lors de la mise en place du cycle. Il va de soi qu'il pourrait en être autrement, comme par exemple avoir un poste de stockage comprenant deux bras fixés, non sur le sol, mais sur un support comme par exemple un mur.

Les moyens de verrouillage de chacun des cycles sont constitués par deux saillies mobiles (6a, 6b) coopérant avec deux logements de verrouillage (7a, 7b).

Selon une caractéristique de l'invention, c'est le cycle (1) qui comprend les deux saillies mobiles de verrouillage et le poste de stockage (3) qui comprend les deux logements en creux de verrouillage (7a, 7b). On notera que le cycle (1) est constitué comme tout cycle, d'un cadre, avec une roue arrière, d'une direction avant avec une roue avant. C'est donc le cycle lui-même qui comprend les moyens de verrouillage avec les deux saillies et non un élément étranger au cycle tel que défini précédemment, comme par exemple un boîtier fixé au cycle.

Ainsi chacune des parties supérieures de la paroi interne de chacun des bras (3a, 3b), de chacun des postes de stockage (3), comprend un logement en creux de verrouillage (7a, 7b). Ainsi chacun des postes de verrouillage comprend deux logements en creux, ayant une forme complémentaire aux saillies destinées à y être introduites. Ces logements sont donc d'axe transversal (X1, X1') sensiblement horizontal et débouchent dans l'espace (E) défini précédemment, mais ne débouchant pas latéralement vers l'extérieur.

Le cycle (2) destiné à coopérer avec les postes de stockage présente de façon connue en soi, un plan général vertical (P) et comporte une direction avant (90) avec une fourche avant (9) constituée par deux branches de fourche (9a, 9b) reliées par une tête de fourche (9c) qui porte une tige de fourche (9d).

La tête de fourche est constituée par un bloc transversal, et c'est selon le mode préféré de l'invention, dans ce bloc transversal qu'est logé, selon l'invention, le système de verrouillage du cycle sur le poste de stockage. Bien entendu, l'on pourrait prévoir que les systèmes des deux saillies latérales ne soient pas dans la tête de fourche, mais par exemple dans chacune des branches de fourche (9a, 9b) pour faire saillie latéralement et coopérer avec les logements de verrouillage correspondant du poste de stockage. Cette solution permettrait d'avoir un poste de stockage moins haut, que lorsque les saillies sont dans la tête de fourche.

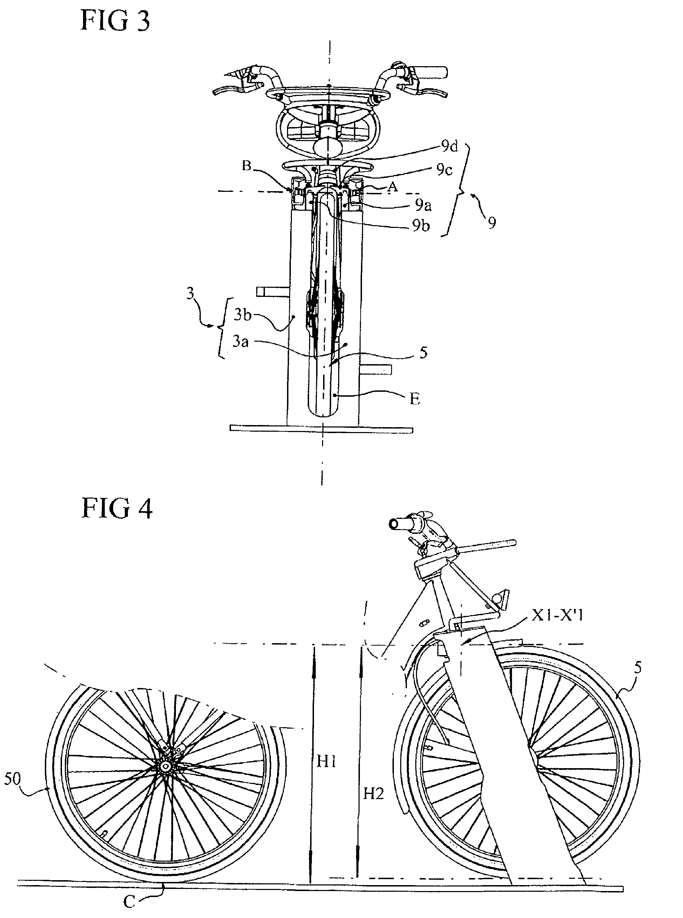

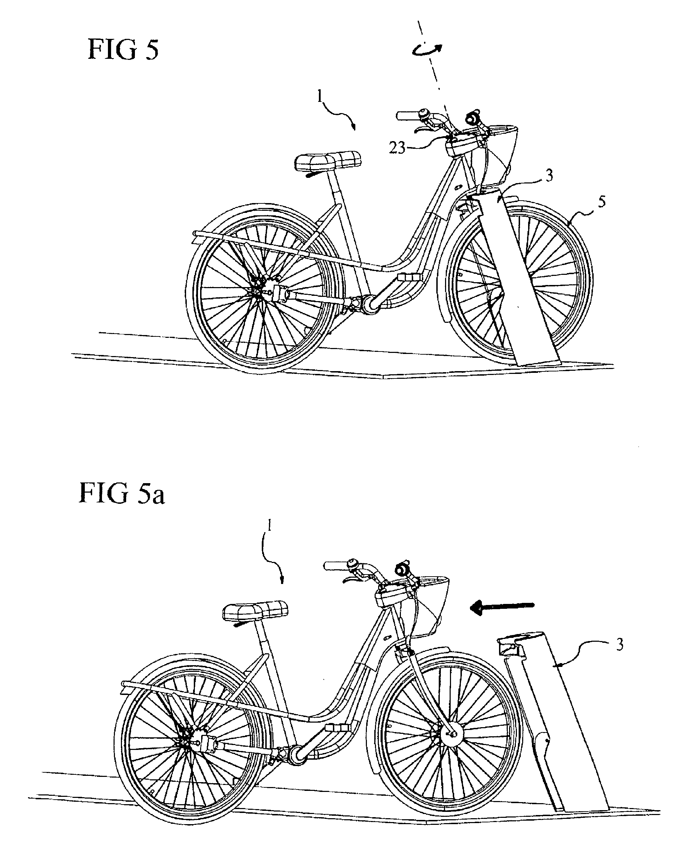

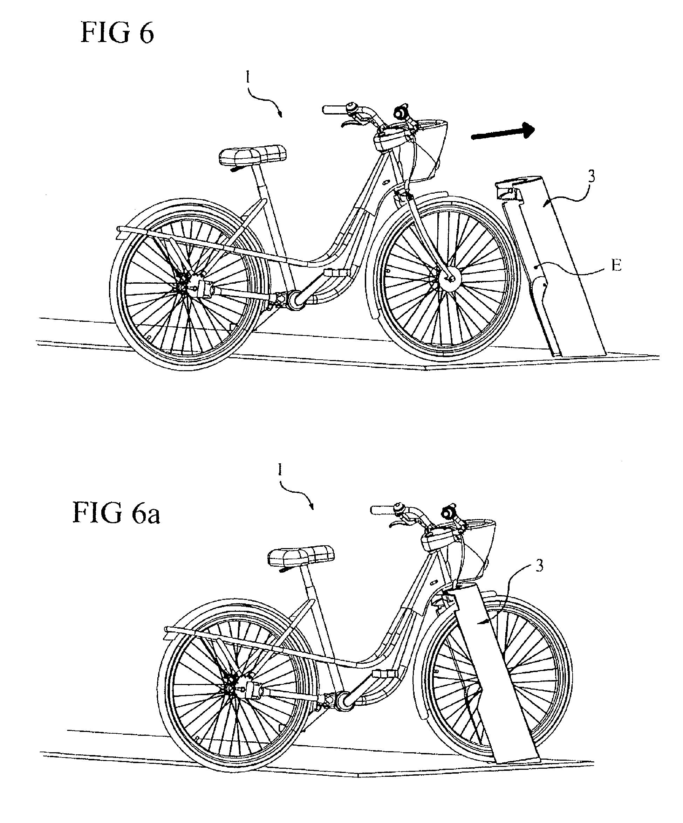

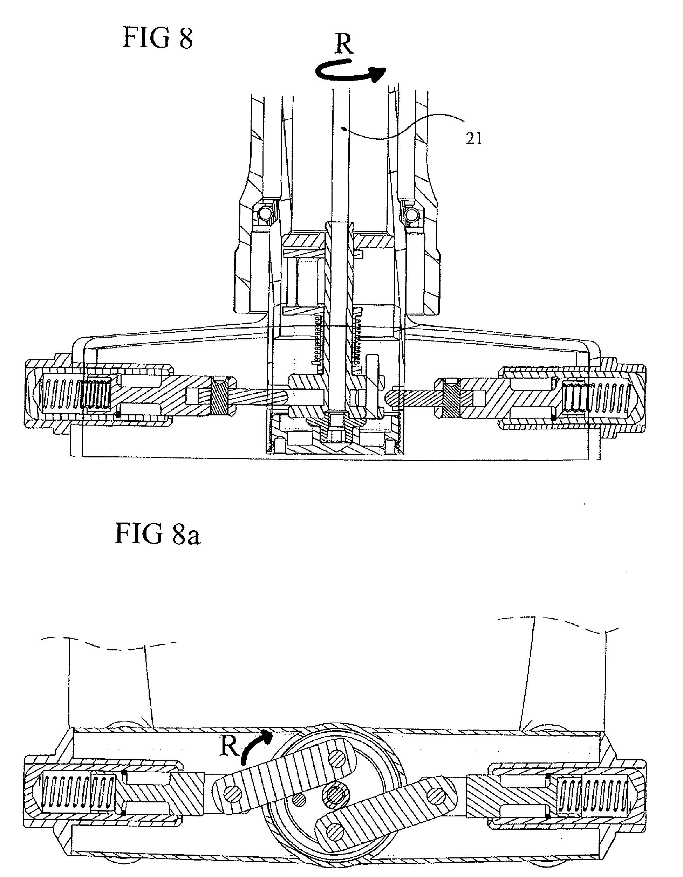

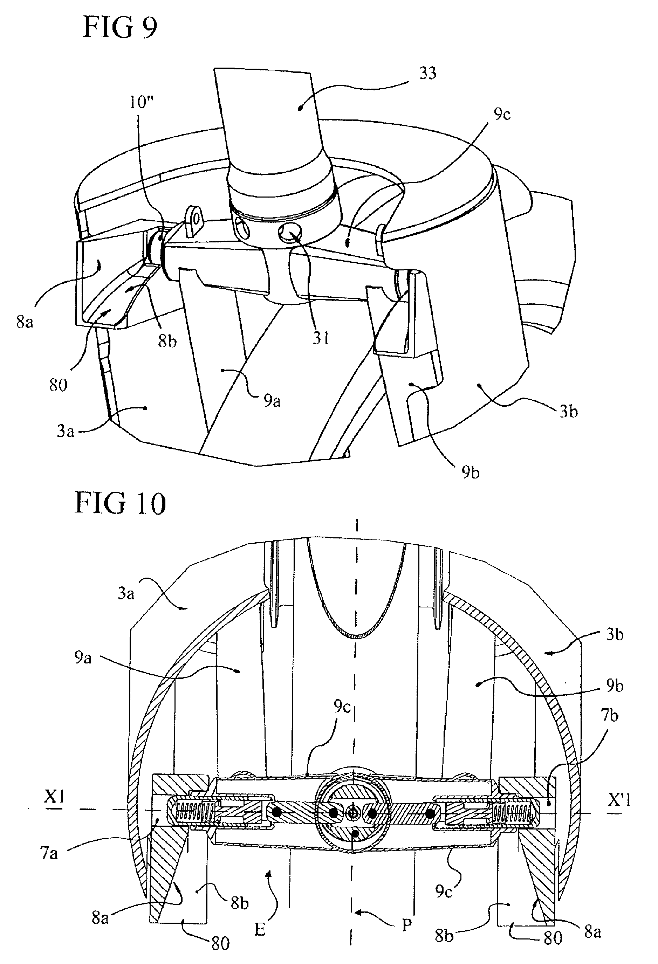

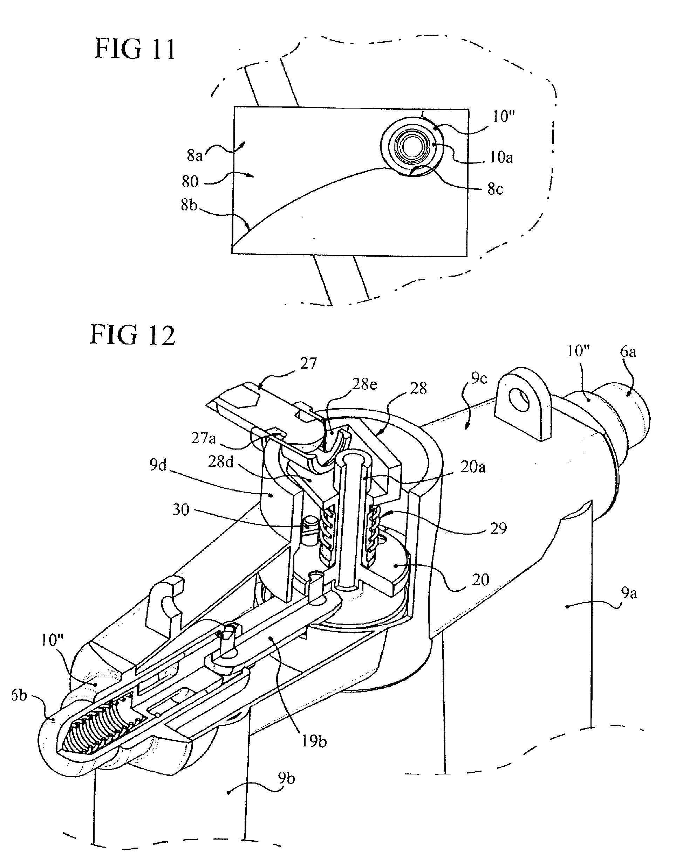

Selon l'invention, les deux saillies mobiles de verrouillage (6a, 6b) sont mobiles transversalement par rapport au plan (P) pour se déplacer latéralement d'une position inactive rétractée (figures 8 et 9), vers une position active de verrouillage en saillie (figures 3, 4, 5, 6a, 7a, 7b, 7c, 7d, 9, 10, 12, 16a,18,20), et inversement.

Dans la position active de verrouillage, celle où le cycle est stocké et verrouillé sur son poste de stockage, chacune des saillies (6a, 6b) est engagée dans le logement en creux de verrouillage (7a, 7b) correspondant du poste de stockage (3) tel qu'illustré aux figures 3, 4, 5, 6a, 7c, 7d, 9, 10, 12, 16a,18 et 20.

De façon avantageuse, et selon une caractéristique de l'invention, le système de verrouillage constitué notamment par les saillies de verrouillage (6a, 6b) est logé dans la tête de fourche avant (9c), chacune des saillies de verrouillage faisant saillie latéralement hors de la tête de fourche dans leur position active de verrouillage.

Ainsi la tête de fourche (9c) comprend à ses extrémités latérales une douille (10a, 10b) dans laquelle est montée mobile en translation un doigt de verrouillage (11a, 11b) dont l'extrémité constitue la saillie de verrouillage (6a, 6b). Chacune des douilles d'axe horizontal (X2, X'2) comporte un logement interne cylindrique axial (12a, 12b) dans lequel est monté coulissant le doigt de verrouillage (11a, 17b).

On notera que chacune des douilles (10a, 10b) comprend une portion tubulaire interne (10') logée dans la tête de fourche (9c) et une portion tubulaire externe (10") faisant saillie hors de la tête de fourche. Dans le premier mode de réalisation, c'est par cette portion tubulaire externe (10") par coopération avec un système de rampe, que le cycle est guidé vers sa position de stockage, comme cela est expliqué plus en détail dans la description.

Chacun des doigts de verrouillage (11a, 11b) comprend un logement interne cylindrique (13a, 13b) et une paroi de fond (14a, 14b), logement interne dans lequel est disposée une tige de commande (15a, 15b) dont l'une des extrémités est logée dans le doigt de verrouillage et dont l'autre fait saillie hors du doigt de verrouillage. Notons que l'extrémité logée dans le doigt de verrouillage présente une paroi cylindrique de guidage (16a, 16b) et une face d'appui (17a, 17b) pour un ressort de compression (18a, 18b) dont l'autre extrémité est en appui sur une paroi de fond du doigt de verrouillage correspondant. On notera que le partie latérale de la tige de commande (15a, 15b), constituée par la paroi cylindrique de guidage et la face d'appui (17a, 17b) est en appui sur une butée périphérique interne (110). Cette butée limite le déplacement latéral vers l'extérieur du doigt de verrouillage, mais permet le déplacement vers l'intérieur dudit doigt, et ce contre l'action du ressort (18a, 18b).

Notons qu'une biellette de commande (19a, 19b) est articulée par l'une de ses extrémités autour d'un axe vertical (190) à l'extrémité de la tige de commande qui fait saillie hors du doigt de verrouillage et par l'autre de ses extrémités autour d'un axe vertical (191), à une pièce rotative de manoeuvre (20). On notera que ladite pièce rotative de manoeuvre (20) est réalisée sous forme d'un disque horizontal, pivotant autour de l'axe vertical (Y, Y') de la tige de fourche (9d), tandis qu'il comprend une portion tubulaire centrale (20a) s'étendant vers le haut. Ajoutons que la face supérieure du disque de la pièce rotative, comprend une tige verticale (30) dont la fonction sera précisée, plus loin dans la description.

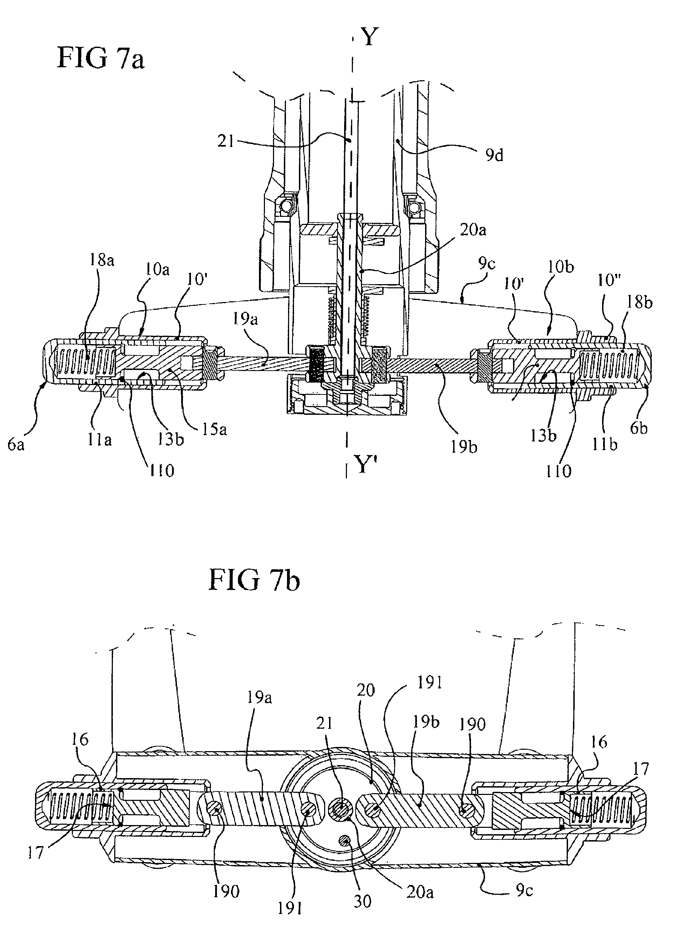

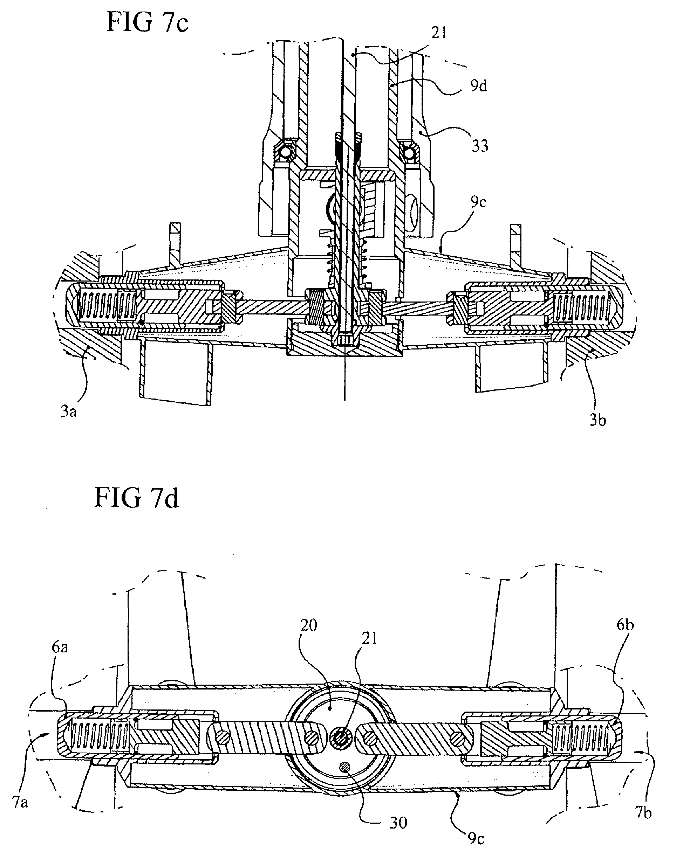

En position active de verrouillage selon laquelle la saillie de verrouillage fait saillie, position illustrée aux figures 7b, 7d, 10, 12, 16b, 18 et 20 on notera que les deux biellettes sont alignées selon l'axe transversal (X2, X'2) rendant ainsi par un effet de genouillère la position verrouillée sécurisée du fait qu'une action axiale sur les saillies de verrouillage ne puisse provoquer une rotation vers la position de déverrouillage. Pour passer de la position active vers la position inactive illustrée 8, 8a,16a, il suffit de faire pivoter la pièce rotative de manoeuvre (20) selon (R) et inversement pour passer de la position inactive vers la position active, il suffit de faire pivoter la pièce rotative de manoeuvre (20) selon une rotation inverse.

La rotation de la pièce rotative de manoeuvre se fait grâce au pivotement d'une tige de commande (21) qui s'étend verticalement dans l'axe vertical (Y, Y') de la tige de fourche. La commande en rotation se fait en sommet de la tige de fourche grâce à une clé (23) identifiée et délivrée par la borne de gestion (4) coopérant avec une serrure (22) disposée au sommet de la tige de direction, dans le cas d'une gestion des vélos par distribution d'une clé.

On a compris de ce qui précède que chacune des saillies latérales mobiles (6a, 6b) est reliée cinématiquement à la pièce rotative de manoeuvre (20), grâce à une biellette (19a, 19b) montée pivotante sur ladite pièce rotative.

Afin de faciliter l'engagement et le positionnement des saillies (6a, 6b) en regard des logements correspondants (7a, 7b) il est prévu 2 phases, une première phase dite de positionnement qui consiste à positionner le cycle dans une position d'équilibre précise et une seconde phase de verrouillage où il ne reste plus qu'à sortir les saillies (6a, 6b) dans leur logement de verrouillage (7a, 7b) cette seconde étape ne nécessitant quasiment aucune énergie du fait que la saillie possède un jeu minimum bien maîtrisé dans toutes les directions de part la précision du positionnement de la phase 1, ainsi dans cette position de verrouillage les saillies ne reprennent aucun effort de cisaillement engendré par le poids du cycle car ceux-ci sont repris entre la douille extérieure (10") et le profil de la came en creux (8C).

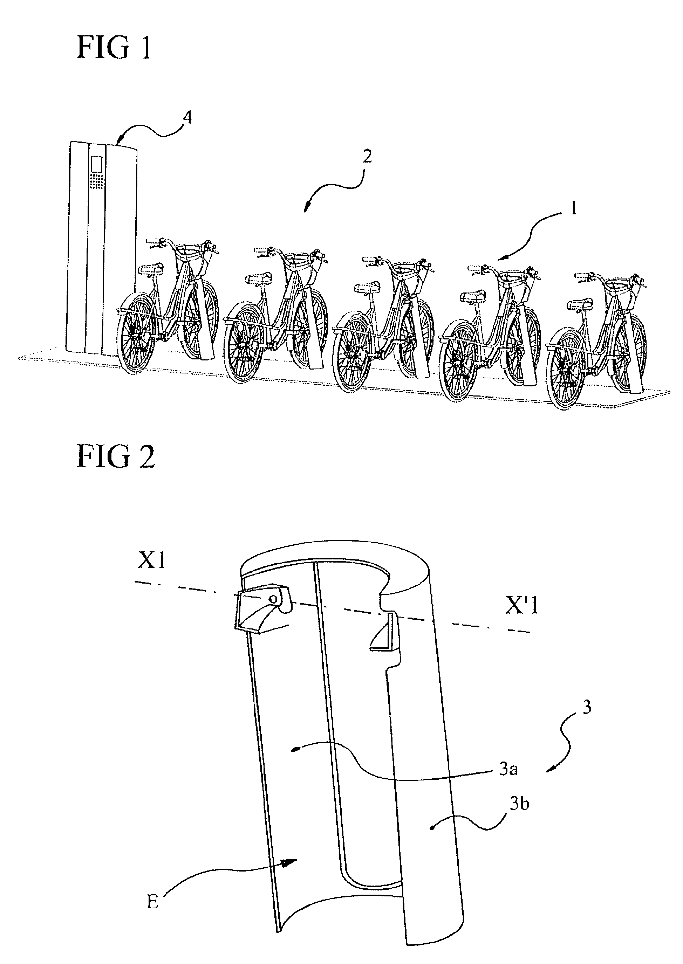

Ainsi pour faciliter l'introduction et le positionnement du vélo dans sa borne il est prévu dans un premier mode de réalisation (fig 1 à 16) pour chacun des logements, un logement d'introduction et de guidage (80), comprenant un ensemble de rampes de guidage (8). Ainsi le logement de guidage est ouvert vers l'arrière (AR), c'est à dire du coté de l'introduction du cycle, et comprend pour chacun des bras:
- une paroi latérale (8a) inclinée pour former avec la paroi latérale correspondante de l'autre bras, deux parois divergentes vers l'arrière.
- une rampe inférieure (8b) courbe qui force par coopération avec chacune des saillies de verrouillage, la roue avant à se soulever.

Un profil en creux (8c) qui fait suite à la rampe inférieure (8b) et qui place ainsi chacune de saillies en regard du logement de verrouillage correspondant. Ce profil en creux sert d'appui pour les portions tubulaires externes (10") de chacune des douilles (10a, 10b), pour constituer les appuis latéraux (A, B) de maintien du cycle.

L'ensemble des rampes de guidage guide le déplacement de la tête de fourche par la coopération des rampes avec la portion tubulaire externe (10") faisant saillie hors de la tête de fourche. Ainsi après que l'utilisateur ait engagé la roue avant du cycle dans l'espace (E) entre les deux bras (3a, 3b), il lui suffit de déplacer le cycle vers l'avant, et la mise en place du verrouillage se fait sans difficulté.

De façon avantageuse, la hauteur (H1) de l'axe (X1, X'1) des logements en creux, est supérieure à la distance (H2) entre l'axe (X2, X'2) des saillies et le point de contact au sol du pneu avant. Ainsi en position de stockage sur son poste de stockage la roue avant est légèrement soulevée par rapport au sol, le cycle étant alors retenu en appui latéral (A, B) au niveau des douilles latérales. Ce qui permet au cycle d'avoir en position de stockage une position stable et équilibrée par ses appuis en trois points (A, B, C), à savoir en appui latéral avant (A, B) et en appui arrière (C) sur la roue arrière (50). On a compris que grâce à cette disposition des appuis du cycle sur son poste de stockage que son maintien en trois points dont deux latéraux qui sont situés au-dessus du centre de gravité du cycle, lui donnent une très bonne stabilité.

On notera aussi que le cycle comprend un système antivol (24) utilisé hors poste de verrouillage quand le cycle n'est pas verrouillé sur un poste de stockage. Cet antivol (24) est constitué par un câble (25) par exemple métallique, avantageusement gainé, logé, dans l'un des tubes de cadre (26) dont l'une des extrémités est bloquée au cadre après extraction, et dont l'autre extrémité, qui est l'extrémité libre, comprend une broche métallique rigide (27) destinée à être engagée dans un trou transversal de verrouillage réalisé d'une part dans la colonne de direction du cadre et d'autre part dans le tube de fourche pour y être verrouillé par un verrou (28), comme nous le verrons plus loin dans la description.

On notera que le système antivol utilisé hors station comprend des moyens de verrouillage de la direction dans une position angulaire par rapport au plan général (P) du cadre.

La broche (27) est constituée par une portion de tige cylindrique, qui comprend une gorge périphérique de verrouillage (27a) destinée à coopérer avec un verrou (28) monté en rotation autour de la portion tubulaire (20a) de la pièce rotative de manoeuvre. On notera aussi que l'extrémité (27b) de la broche est sensiblement sphérique pour provoquer la rotation du verrou (28) lors de l'introduction de la broche.

A l'intérieur de la tête de fourche (9c) en position centrale et au-dessus de la pièce rotative de manoeuvre (20) est disposé le verrou (28), monté pivotant sur l'axe de la pièce rotative de manoeuvre qui s'étend vers le haut. Ce verrou (28) est sollicité en rotation par un ressort (29) pour être mis en butée sur une butée (30) solidaire de la pièce rotative de manoeuvre (20), ladite butée étant constituée par la tige verticale (30) décrite précédemment.

Ainsi, le verrou mobile (28) est constitué par une partie centrale tubulaire (28a), tandis que son extrémité inférieure porte un flasque inférieur (28b) qui comprend une saillie (28c) destinée à être en appui sur la butée (30) de la pièce rotative de manoeuvre (20). L'extrémité supérieure de la partie centrale tubulaire comprend un flasque supérieur (28d) prolongée vers le haut par une paroi verticale de verrouillage (28e). Cette dernière est destinée au blocage de la broche métallique (27) de l'antivol.

On notera que le tube de direction (33) du cadre comprend au niveau de la paroi verticale de verrouillage du verrou, un trou radial (31) d'axe horizontal formant avec le plan (P) un angle aigu (A), tandis que la paroi de la tige de fourche (9d) comprend dans le même plan horizontal, un trou (32) correspondant, dont l'axe n'est pas, lorsque la roue avant est alignée dans le plan (P), dans l'alignement du trou (31) du tube de direction. Ainsi lorsque la roue avant est alignée dans le plan (P), le trou (32) de la tête de fourche (9d) n'est pas aligné avec le trou (31) du tube de direction (33) du cadre. On aura compris que les deux trous (31, 32) sont destinés à recevoir la broche (27) du câble d'antivol.

Le verrouillage du cycle hors poste de verrouillage se fait lors d'une première étape, par extraction hors du cadre du câble par préhension de la broche et par traction pour sortir le câble du cadre jusqu'en butée, puis l'utilisateur oriente son guidon de façon à aligner les deux trous (31, 32), puis après avoir engagé la broche (27) dans les deux trous alignés, la rampe d'extrémité (27b) de la broche provoque le pivotement du verrou (28) contre l'action du ressort (29), jusqu'à ce que la paroi verticale de verrouillage (28e) du verrou (28) puisse s'engager dans la gorge périphérique de verrouillage (27a) de la broche (27). Le déverrouillage de l'antivol se fait grâce au pivotement de la clé (22) engagée dans la serrure (23). Ajoutons que lorsque le cycle est sécurisé hors station de stockage, l'utilisateur malveillant qui voudrait emprunter le cycle d'un utilisateur autorisé, et qui couperait le câble de l'antivol ne pourrait pas se servir du cycle, puisque la direction est verrouillée dans une position angulaire, qui ne permet pas le roulage.

On a compris que le retrait d'un vélo nécessite une clé, et la distribution de cette clé se fait grâce à un dispositif de distribution et de retour des clés. Ce dispositif est constitué par un panneau de distribution (40) de clé solidaire de la borne de distribution (4). A cet effet la borne comprend une armoire à clés, et un panneau de communication permettant à l'utilisateur de communiquer avec un serveur. Ledit panneau comprend au moins une notice explicative, un clavier numérique et un afficheur pour que l'utilisateur puisse dialoguer avec le serveur et un lecteur de carte.

On a décrit précédemment un système de distribution et de remise en place des vélos, par distribution de clés, mais il pourrait bien entendu en être autrement, comme par exemple par radio identification, communément désignée sous le sigle RFID (de l'Anglais "radio frequency identification") qui est une méthode pour mémoriser et récupérer des données à distance en utilisant des marqueurs appelés "radio étiquette" appelé communément "RFID tag". Ces tags comprennent une antenne et une puce électronique qui permet de recevoir et de répondre aux requêtes radio émises depuis l'émetteur récepteur. Ainsi dans ce cas les postes de verrouillage sont équipés de "tags" et le vélo comporte un transpondeur. Le "tag", qui est un dispositif passif, ne nécessite aucune source d'énergie. C'est le vélo qui communique avec une borne qui se trouve à proximité du poste de stockage et qui communique avec un serveur distant ou directement avec un serveur distant, sans passer par une borne de communication. A cet effet le vélo peut comporter un panneau de communication (51) alimenté en courant électrique par des piles, des batteries ou une dynamo ou similaire, ledit panneau (51) comportant par exemple un clavier numérique et/ou un lecteur de carte. Ainsi, l'accès au service peut se faire directement grâce à une carte d'abonnement (52) ou un téléphone (53), ou communiquer avec la borne de gestion (4) qui communique avec un serveur distant (54) par WIFI ou GPRS, le paiement se faisant par carte bancaire (55) tel que cela est illustré à la figure 16. Dans le cas d'une gestion électronique sans clés, le déverrouillage du vélo de son poste de stockage se fera par exemple grâce à un micro moteur qui ferait pivoter la tige de commande (21).

Dans un deuxième mode de réalisation (fig. 18, 19, 20) le mécanisme de la fourche est identique au premier mode de réalisation que nous avons décris en revanche la borne de sécurisation est un peu différente.

Le système de positionnement du cycle pour la première phase dite de positionnement est, cette fois, non plus assuré par la co-opération des douilles externes (10) avec les deux cames comme dans le premier mode de réalisation, mais directement entre la roue avant et une rampe (90) disposée au sol. Ainsi lorsque l'utilisateur veut rendre le cycle emprunté il positionne la roue avant devant la rampe (90) qui dispose idéalement d'une première zone convergente destinée à faciliter le centrage du pneumatique sur cette rampe, l'utilisateur pousse alors le vélo obligeant alors la roue avant à monter sur une première pente montante (91) de la rampe (90) ensuite la roue arrivera à une position d'altitude maximum pour ensuite redescendre naturellement par gravité sous l'action de la seconde pente descendante (92) de la rampe (90), le cycle terminera alors sa course par l'action combinée des deux douilles droites et gauches (10a , 10b) de la fourche (9) contre les butées longitudinales (93a, 93b) aménagées frontalement sur la borne de stockage calant ainsi la direction. Ainsi le cycle se trouve positionné de façon très stable maintenant sur quatre points d'appui, le point A au niveau du contact au sol de la roue arrière, les points B et C au niveau des douilles de guidage droite et gauche et du point D contact entre la pente descendante (92) et la roue avant (5), son centrage latéral étant assuré par, d'une part le centrage du pneumatique dans la rampe 90 près du sol et d'autre part par les faces latérales droite et gauche de la fourche dans la zone des douilles (10a, 10b).

La pente descendante pourra faire un angle de 5 à 25° avec l'horizontale, plus cet angle étant important plus la stabilité sur son support étant efficace, rendant aussi le cycle plus ferme à sortir.

Une fois la première phase de positionnement assurée, il suffit alors de verrouiller les saillies dans leur logement de verrouillage en tournant la clé ou en ordonnant la rotation du moteur de commande. Dans cette phase de verrouillage les deux doigts de verrouillage (6a, 6b) sortiront pour se verrouiller dans leur logement de verrouillage (7a,7b), il ne sera alors plus possible de retirer le cycle car les saillies viendront alors heurter les parois du logement de verrouillage constituées, verticalement par le couvercle (94) et vers l'arrière par les butées (95a, 95b).

Ce deuxième mode de réalisation a l'avantage d'induire moins de frottements car il agit par le roulement direct de la roue avant dans la rampe et non plus par frottement sur une came, il a aussi l'avantage d'être très tolérant dimensionnellement et de fonctionner de la même manière avec différents types de pneumatiques ou avec une fourche amortissant télescopique, dans ce cas il est préférable d'incliner les butées longitudinales (93a, 93b) sensiblement parallèlement à la direction de la fourche télescopique afin que le positionnement soit indépendant de la course de la fourche télescopique.

On a compris que quelque soit le mode d'exploitation, les postes de stockage sont passifs, et vierges de toute connexion et alimentation électrique, et de tout équipement sophistiqué, ce qui est un grand avantage par rapport aux installations existantes, qui, elles nécessitent des travaux de génie civil importants. Ainsi, l'exploitant pourra installer des postes de stockage comme il lui semble, et en ajouter quand cela est rendu nécessaire et ce sans avoir à faire des travaux notamment de branchement, puisque les postes de l'invention sont passifs et leur mise en place consiste à seulement les fixer au sol. D'ailleurs le système de l'invention permet à l'exploitant de fixer les postes de stockage selon tout type de géométrie, comme par exemple en ligne, en rond, en triangle, en angle etc...

En position de stockage sur son poste de stockage, le cycle est dans une position particulièrement stable par son maintient latéral sur les bras du poste de stockage, la roue avant n'étant pas en appui sur le sol.

Le cycle à assistance électrique représenté aux figures 22, 23 et 24 est une variante de l'invention selon le premier mode de réalisation, comportant un accumulateur électrique (100) et un moteur électrique d'assistance intégré par exemple dans la roue avant (5), différents capteurs non représentés (Couple, cadence de pédalage, vitesse,...) associés à un microcontrôleur permettent d'asservir l'alimentation du moteur d'assistance afin qu'il procure une assistance adaptée aux besoins du cycliste. Ce type de cycle a une autonomie d'assistance dépendant de la puissance demandée, de la capacité de l'accumulateur et du niveau de charge, l'autonomie est généralement comprise aujourd'hui entre 20 et 100 Km, ce qui est suffisant pour un usage locatif urbain, d'autant que pour un système collectif on a toujours recours à un échange du cycle à une station intermédiaire pour en reprendre un autre chargé. Dans ce mode de réalisation, la borne n'est plus passive mais elle doit être alimentée en énergie (102) afin de recharger la batterie du cycle, on peut toutefois la rendre autonome en disposant des panneaux solaires photovoltaïques.

Le système de connectique gauche représenté à la figure 23 est symétrique du coté droit permettant ainsi de fermer un circuit électrique permettant la recharge de la batterie. Ce circuit électrique peut être alimenté en courant continu ou en courant alternatif mais dans ce cas la gestion de la charge devra être nécessairement intégrée au cycle avec au moins un système de redresseur. Comme on peut le voir à la figure 23 le doigt de verrouillage (11a) est percé et comporte une bague isolante fixe (103a) permettant d'isoler électriquement le plot de connexion central mobile (104a), réalisé en matériau métallique conducteur avec un revêtement ayant de bonnes propriétés électriques par rapport à la corrosion (Nickel, Argent, Or...), ce plot de connexion est mobile axialement et poussé par le ressort de compression conducteur (18a) lui-même en appui du coté interne sur un plot de connexion (105a) dans lequel est serti ou soudé le fil électrique gauche (106a) qui est raccordé à son autre extrémité au boîtier électronique de gestion du cycle. La tige de commande (15a) doit évidemment dans ce cas être réalisée en matériau isolant, par exemple en résine acétale pour ne pas court-circuiter le circuit électrique. Lorsque le vélo est non verrouillé, le ressort (18a) pousse le plot de connexion (103a) en butée sur la paroi du fond du doigt de verrouillage (10a). Par contre lorsque le cycle est verrouillé sur son poste de stockage, un plot de connexion fixe (107a) disposé sur la station en regard du plot de connexion central mobile (104a) du cycle vient le bloquer dans sa course en générant un effort égal à la pré charge du ressort (18a), c'est pour cela que dans cette position verrouillée on retrouve un jeu fonctionnel (108) entre la face d'appui axiale du plot de connexion et la paroi du fond du doigt de verrouillage. Ce jeu doit être supérieur au jeu latéral que le cycle a latéralement dans sa station de ce stockage afin de toujours bien assurer une pression suffisante pour assurer le contact des deux cotés droit et gauche et ne pas avoir de coupure du circuit électrique. Comme représenté à la figure 22, le plot de connexion fixe (107a) est isolé électriquement de la structure de la station par une bague isolante (109a) elle-même encastrée dans la structure de la station par 2 vis (110a). Le plot de connexion fixe (107a) est taraudé ce qui permet de le serrer dans la bague isolante (109a) au moyen d'un écrou (111a) serrant du même coup la cosse (112a) reliée électriquement au fil (113a) assurant l'alimentation électrique de l'ensemble. Ainsi on comprendra aisément que le fil d'alimentation (113a) de la station est alors connecté électriquement au fil d'alimentation interne du cycle, rendant ainsi possible la charge automatique de la batterie par les 2 cotés droit et gauche.

Sur ce type de système avec une connexion électrique il est très intéressant d'ajouter un système de communication uni ou bi-directionnel, par le procédé connu sous le nom de CLP (courant ligne porteuse) qui consiste à faire transiter des données en superposant un courant alternatif haute fréquence modulé sur le courant principal et de le démoduler après réception pour extraire les données, cette technologie est par exemple bien décrite dans la demande de brevet FR 2 863 121, ce système permet ainsi de transiter toutes informations utiles sur l'identité du cycle, ses défaillances éventuelles, l'identité de l'emprunteur, la distance parcourue, la durée de l'emprunt, le niveau de charge de la batterie, sans avoir besoin d'une transmission radiofréquence, plus onéreuse, et consommant plus d'énergie, et plus polluante électro-magnétiquement et moins fiable.

Afin d'éviter le vandalisme qui pourrait être fait en court-circuitant les plots de connexion fixes de la station on peut ajouter un volet protecteur de chaque coté pour éviter les intrusions d'objet, il est souhaitable aussi d'ajouter une protection électrique et électronique pour écarter les principaux risques de vandalisme et/ou d'utiliser un procédé similaire à la demande FR 2 590 087 pour gérer la charge de l'accumulateur.

On pourrait disposer plusieurs plots de connexion de chaque coté ou même se servir du contact direct de chacune des douilles ou des doigts de verrouillage par rapport au support de stockage en veillant à les isoler électriquement entre eux.

On notera que la station de stockage peut aussi être équipée, d'un dispositif de gonflage permettant aux utilisateurs de procéder au gonflage du cycle en cas de besoin.

## Revendications

1. Système de stockage et de verrouillage de cycles, qui comprend plusieurs cycles (1) et au moins une station de stockage (2) comprenant plusieurs postes de stockage et de verrouillage (3), tandis que le système comprend des moyens de verrouillage de chacun des cycles sur l'un des postes de stockage et de verrouillage, chacun des postes de stockage (3) étant constitué par deux bras (3a,3b) pour former entre eux un espace (E) dans lequel la roue avant (5) du cycle (1) est destiné à y être introduite lors de la mise en place du cycle, tandis que les moyens de verrouillage de chacun des cycles sont constitués par deux saillies latérales mobiles latéralement (6a, 6b) coopérant avec deux logements de verrouillage (7a, 7b), **caractérisé en ce que** c'est le cycle (1) qui comprend les deux saillies mobiles de verrouillage et le poste de stockage (3) qui comprend les deux logements en creux de verrouillage (7a, 7b),
et dont le cycle présente de façon connue en soi, un plan général vertical (P) et comporte une direction avant (90) avec une fourche avant (9) constituée par deux branches de fourche (9a, 9b) reliées par une tête de fourche (9c) qui porte une tige de fourche (9d), tandis que la tête de fourche est constituée par un bloc transversal, où la tête de fourche (9c) comprend le système de verrouillage du cycle sur le poste de stockage avec ses deux saillies de verrouillage destinées à coopérer avec les logements en creux correspondants.

2. Système de stockage et de verrouillage de cycles, qui comprend plusieurs cycles (1) et au moins une station de stockage (2) comprenant plusieurs postes de stockage et de verrouillage (3), tandis que le système comprend des moyens de verrouillage de chacun des cycles sur l'un des postes de stockage et de verrouillage, chacun des postes de stockage (3) étant constitué par deux bras (3a,3b) pour former entre eux un espace (E) dans lequel la roue avant (5) du cycle (1) est destiné à y être introduite lors de la mise en place du cycle, tandis que les moyens de verrouillage de chacun des cycles sont constitués par deux saillies latérales mobiles latéralement (6a, 6b) coopérant avec deux logements de verrouillage (7a, 7b), **caractérisé en ce que** c'est le cycle (1) qui comprend les deux saillies mobiles de verrouillage et le poste de stockage (3) qui comprend les deux logements en creux de verrouillage (7a, 7b),
et dont le cycle de façon connue en soi, un plan général vertical (P) et comporte une direction avant (90) avec une fourche avant (9) constituée par deux branches de fourche (9a, 9b) reliées par une tête de fourche (9c) qui porte une tige de fourche (9d), tandis que la tête de fourche est constituée par un bloc transversal, où chacune des branches de fourche (9a, 9b) comprend une saillie latérale mobile (6a, 6b) pour faire saillie latéralement et coopérer avec les logements de verrouillage correspondant du poste de stockage.

3. Système de stockage et de verrouillage de cycles selon l'une quelconque des revendications précédentes, **caractérisé en ce que** les deux bras (3a, 3b) sont fixés au sol et s'étendent vers le haut

4. Système de stockage et de verrouillage de cycles selon la revendication précédente, **caractérisé en ce que** la partie supérieure de la paroi interne de chacun des bras (3a, 3b) de chacun des postes de stockage (3) comprend un logement en creux de verrouillage (7a, 7b), ayant une forme complémentaire aux saillies destinées à y être introduites.

5. Système de stockage et de verrouillage de cycles selon l'une quelconque des revendications précédentes, **caractérisé en ce que** les moyens de verrouillage et de déverrouillage comprennent une pièce rotative de manoeuvre (20) commandée par une tige de commande (2) logée dans la tige de fourche.

6. Système de stockage et de verrouillage de cycles (1) selon la revendication précédente, **caractérisé en ce que** dans le cas d'une gestion électronique sans clés, le déverrouillage du vélo de son poste de stockage se fait grâce à un micro moteur qui ferait pivoter la tige de commande (21).

7. Système de stockage et de verrouillage de cycles (1) selon la revendication précédente 6 ou 7, **caractérisé en ce que** chacune des saillies latérales mobiles (6a, 6b) est reliée cinématiquement à la pièce rotative de manoeuvre (20), grâce à une biellette (19a, 19b) montée pivotante sur ladite pièce rotative

8. Système de stockage et de verrouillage de cycles selon l'une quelconque des revendications précédentes, **caractérisé en ce que** chacune des saillies de verrouillage (6a, 6b) est logée coulissant, dans une douille (10a, 10b).

9. Système de stockage et de verrouillage de cycles selon la revendication précédente, **caractérisé en ce que** chacune des douilles (10a, 10b) comprend une portion tubulaire interne (10') logée dans la tête de fourche (9c) et une portion tubulaire externe (10") faisant saillie hors de la tête de fourche, et c'est par cette portion tubulaire externe (10") par coopération avec un système de rampe, que le cycle est guidé vers sa position de stockage, et de verrouillage.

10. Système de stockage et de verrouillage de cycles selon la revendication précédente, **caractérisé en ce que** chacune des saillies de verrouillage fait partie d'un doigt de verrouillage (11a, 11b) qui comprend un logement interne cylindrique (13a, 13b) et une paroi de fond (14a, 14b), logement interne dans lequel est disposée une tige de commande (15a, 15b) dont l'une des extrémités est logée dans le doigt de verrouillage et dont l'autre fait saillie hors du doigt de verrouillage, tandis que l'extrémité logée dans le doigt de verrouillage présente une paroi cylindrique de guidage (16a, 16b) et une face d'appui (17a, 17b) pour un ressort de compression (18a, 18b) dont l'autre extrémité est en appui sur une paroi de fond du doigt de verrouillage correspondant, et que la partie latérale de la tige de commande (15a, 15b), constituée par la paroi cylindrique de guidage et la face d'appui (17a, 17b) est en appui sur une butée périphérique interne (110).

11. Système de stockage et de verrouillage de cycles selon la revendication précédente, **caractérisé en ce qu'**une biellette de commande (19a, 19b) est articulée par l'une de ses extrémités autour d'un axe vertical (190) à l'Extrémité de la tige de commande qui fait saillie hors du doigt de verrouillage et par l'autre de ses extrémités autour d'un axe vertical (191), à la pièce rotative de manoeuvre (20).

12. Système de stockage et de verrouillage de cycles, selon la revendication précédente, **caractérisé en ce qu'**en position active de verrouillage selon laquelle les saillies de verrouillage font saillies, les deux biellettes sont alignées selon l'axe transversal (X2, X'2) rendant ainsi par un effet de genouillère la position verrouillée sécurisée du fait qu'une action axiale sur les saillies de verrouillage ne puisse provoquer une rotation vers la position de déverrouillage.

13. Système de stockage et de verrouillage de cycles selon la revendication précédente, caractérisé en ce chacun des doigts de verrouillage comprend un plot de connexion centrale mobile (104a) destiné à coopérer avec un plot de connexion fixe (107a) disposé sur le poste de stockage, chacun des plots de connexion fixe étant relié à une alimentation, tandis que chacun des plots de connexion centrale mobile (104a) est connecté électriquement au circuit électrique du cycle.

14. Système de stockage et de verrouillage de cycles (1) selon l'une quelconque des revendications précédentes, **caractérisé en ce que** le cycle comprend un système antivol utilisé hors station qui comprend des moyens de verrouillage de la direction dans une position angulaire par rapport au plan général (P) du cadre.

15. Système de stockage et de verrouillage de cycles (1) selon la revendication précédente, **caractérisé en ce que** le système antivol utilisé hors station est un antivol (24) constitué par un câble (25) dont l'extrémité comprend une broche (27) destinée à être engagée dans un trou transversal de verrouillage réalisé d'une part dans la colonne de direction du cadre et d'autre part dans le tube de fourche pour y être verrouillé par un verrou (28).

## Claims

1. System for storing and locking bicycles, which comprises several bicycles (1) and at least one storage station (2) comprising several storage and locking posts (3), while the system comprises means of locking each of the bicycles on one of the storage and locking posts, each of the storage posts (3) consisting of two arms (3a, 3b) for forming between them a space (E) in which the front wheel (5) of the bicycle (1) is intended to be introduced when the bicycle is positioned, while the means of locking each of the bicycles consist of two laterally movable lateral projections (6a, 6b) cooperating with two locking housings (7a, 7b), **characterised in that** it is the bicycle (1) that comprises the two movable locking projections and the storage post (3) that comprises the two hollow locking housings (7a, 7b), and wherein the bicycle has, as is known per se, a vertical general plane (P) and comprises front steering (90) with a front fork (9) formed by two fork branches (9a, 9b) connected by a fork head (9c) that carries a fork stem (9d), while the fork head is formed by a transverse block, where the fork head (9c) comprises the system for locking the bicycle on the storage post with its two locking projections intended to cooperate with the corresponding hollow housings.

2. System for storing and locking bicycles, which comprises several bicycles (1) and at least one storage station (2) comprising several storage and locking posts (3), while the system comprises means of locking each of the bicycles on one of the storage and locking posts, each of the storage posts (3) consisting of two arms (3a, 3b) for forming between them a space (E) in which the front wheel (5) of the bicycle (1) is intended to be introduced when the bicycle is positioned, while the means of locking each of the bicycles consist of two laterally movable lateral projections (6a, 6b) cooperating with two locking housings (7a, 7b), **characterised in that** it is the bicycle (1) that comprises the two movable locking projections and the storage post (3) that comprises the two hollow locking housings (7a, 7b), and wherein the bicycle has, as is known per se, a vertical general plane (P) and comprises front steering (90) with a front fork (9) formed by two fork branches (9a, 9b) connected by a fork head (9c) that carries a fork stem (9d), while the fork head is formed by a transverse block, where each of the fork branches (9a, 9b) comprises a movable lateral projection (6a, 6b) for projecting laterally and cooperating with corresponding housings of the storage post.

3. System for storing and locking bicycles according to any one of the preceding claims, **characterised in that** the two arms (3a, 3b) are fixed to the ground and extend upwards.

4. System for storing and locking bicycles according to the preceding claim, **characterised in that** the top part of the internal wall of each of the arms (3a, 3b) of each of the storage posts (3) comprises a hollow locking housing (7a, 7b) having a shape complementary to the projections intended to be introduced therein.

5. System for storing and locking bicycles according to any one of the preceding claims, **characterised in that** the locking and unlocking means comprise a rotary manoeuvring piece (20) controlled by a control rod (2) housed in the fork stem.

6. System for storing and locking bicycles (1) according to the preceding claim, **characterised in that**, in the case of keyless electronic management, the unlocking of the bike from its storage station is done by means of a micromotor that would pivot the control rod (21).

7. System for storing and locking bicycles (1) according to the preceding claim 6 or 7, **characterised in that** each of the movable lateral projections (6a, 6b) is kinematically connected to the rotary manoeuvring piece (20), by means of a link (19a, 19b) mounted pivotally on said rotary piece.

8. System for storing and locking bicycles according to any one of the preceding claims, **characterised in that** each of the locking projections (6a, 6b) is housed slidably in a socket (10a, 10b).

9. System for storing and locking bicycles according to the preceding claim, **characterised in that** each of the sockets (10a, 10b) comprises an internal tubular portion (10') housed in the fork head (9c) and an external tubular portion (10") projecting out of the fork head, and it is by means of this external tubular portion (10"), by cooperation with a ramp system, that the bicycle is guided to its storage and locking position.

10. System for storing and locking bicycles according to the preceding claim, **characterised in that** each of the locking projections forms part of a locking finger (11a, 11b) that comprises a cylindrical internal housing (13a, 13b) and a bottom wall (14a, 14b), an internal housing in which a control rod (15a, 15b) is placed, one of the ends of which is housed in the locking finger and the other end of which projects out of the locking finger, while the end housed in the locking finger has a cylindrical guide wall (16a, 16b) and a support face (17a, 17b) for a compression spring (18a, 18b) the other end of which is in abutment on a bottom wall of the corresponding locking finger, and **in that** the lateral part of the control rod (15a, 15b), formed by the cylindrical guide wall and the support face (17a, 17b), is in abutment on an internal peripheral stop (110).

11. System for storing and locking bicycles according to the preceding claim, **characterised in that** a control link (19a, 19b) is articulated by one of its ends about a vertical axis (190) at the end of the control rod that projects out of the locking finger and by the other end about a vertical axis (191), on the rotary manoeuvring piece (20).

12. System for storing and locking bicycles according to the preceding claim, **characterised in that**, in the active locking position in which the locking projections project, the two links are aligned on the transverse axis (X2, X'2), thus, by means of a knuckle joint effect, making the locked position secure because an axial action on the locking projections cannot cause a rotation towards the unlocking position.

13. System for storing and locking bicycles according to the preceding claim, **characterised in that** each of the locking fingers comprises a movable central connection stud (104a) intended to cooperate with a fixed connection stud (107a) placed on the storage post, each of the fixed connection studs being connected to a power supply, while each of the movable central connection studs (104a) is electrically connected to the electrical circuit of the bicycle.

14. System for storing and locking bicycles (1) according to any one of the preceding claims, **characterised in that** the bicycle comprises an antitheft system used off-station that comprises means of locking the steering in an angular position with respect to the overall plane (P) of the frame.

15. System for storing and locking bicycles (1) according to the preceding claim, **characterised in that** the antitheft system used off-station is an antitheft device (24) consisting of a cable (25) the end of which comprises a pin (27) intended to be engaged in a transverse locking hole produced firstly in the steering column of the frame and secondly in the fork tube in order to be locked therein by a bolt (28).

## Patentansprüche

1. Abstell- und Absperrsystem für Fahrräder, umfassend mehrere Fahrräder (1) und mindestens eine Abstellstation (2), umfassend mehrere Abstell- und Absperreinheiten (3), während das System Mittel zum Absperren jedes der Fahrräder an einer der Abstell- und Absperreinheiten umfasst, wobei jede der Abstelleinheiten (3) von zwei Armen (3a, 3b) gebildet ist, um zwischen sich einen Raum (E) zu bilden, in den das Vorderrad (5) des Fahrrades (1) beim Anbringen des Fahrrades eingeführt werden soll, während die Absperrmittel für jedes der Fahrräder von zwei seitlichen zur Seite beweglichen Vorsprüngen (6a, 6b) gebildet sind, die mit zwei Absperrlagerungen (7a, 7b) zusammenwirken, **dadurch gekennzeichnet, dass** das Fahrrad (1) die beiden beweglichen Absperrvorsprünge umfasst und die Abstelleinheit (3) die beiden hohlen Absperrlagerungen (7a, 7b) umfasst, wobei das Fahrrad auf an sich bekannte Weise eine allgemeine Vertikalebene (P) aufweist und eine vordere Lenkung (90) mit einer vorderen Gabel (9) umfasst, die von zwei Gabelholmen (9a, 9b) gebildet ist, die durch einen Gabelkopf (9c) verbunden sind, der eine Gabelstange (9d) trägt, während der Gabelkopf (9c) das Absperrsystem des Fahrrads an der Abstelleinheit mit seinen zwei Absperrvorsprüngen umfasst, die dazu bestimmt sind, mit den entsprechenden hohlen Lagerungen zusammenzuwirken.

2. Abstell- und Absperrsystem für Fahrräder, umfassend mehrere Fahrräder (1) und mindestens eine Abstellstation (2), umfassend mehrere Abstell- und Absperreinheiten (3), während das System Mittel zum Absperren jedes der Fahrräder an einer der Abstell- und Absperreinheiten umfasst, wobei jede der Abstelleinheiten (3) von zwei Armen (3a, 3b) gebildet ist, um zwischen sich einen Raum (E) zu bilden, in den das Vorderrad (5) des Fahrrades (1) beim Anbringen des Fahrrades eingeführt werden soll, während die Absperrmittel für jedes der Fahrräder von zwei seitlichen zur Seite beweglichen Vorsprüngen (6a, 6b) gebildet sind, die mit zwei Absperrlagerungen (7a, 7b) zusammenwirken, **dadurch gekennzeichnet, dass** das Fahrrad (1) die beiden beweglichen Absperrvorsprünge umfasst und die Abstelleinheit (3) die beiden hohlen Absperrlagerungen (7a, 7b) umfasst, wobei das Fahrrad auf an sich bekannte Weise eine allgemeine Vertikalebene (P) aufweist und eine vordere Lenkung (90) mit einer vorderen Gabel (9) umfasst, die von zwei Gabelholmen (9a, 9b) gebildet ist, die durch einen Gabelkopf (9c) verbunden sind, der eine Gabelstange (9d) trägt, während der Gabelkopf von einem quer verlaufenden Block jeder der Gabelholme (9a, 9b) gebildet ist, umfassend einen beweglichen seitlichen Vorsprung (6a, 6b), um seitlich überzuragen und mit den entsprechenden Absperrlagerungen der Abstelleinheit zusammenzuwirken.

3. Abstell- und Absperrsystem für Fahrräder nach einem der vorhergehenden Ansprüche, **dadurch gekennzeichnet, dass** die beiden Arme (3a, 3b) am Boden befestigt sind und sich nach oben erstrecken.

4. Abstell- und Absperrsystem für Fahrräder nach dem vorhergehenden Anspruch, **dadurch gekennzeichnet, dass** der obere Teil der Innenwand jedes der Arme (3a, 3b) jeder der Abstelleinheiten (3) eine hohle Absperrlagerung (7a, 7b) umfasst, die eine komplementäre Form zu den Vorsprüngen hat, die dazu bestimmt sind, in sie eingeführt zu werden.

5. Abstell- und Absperrsystem für Fahrräder nach einem der vorhergehenden Ansprüche, **dadurch gekennzeichnet, dass** die Absperr- und Entsperrmittel ein drehbares Betätigungsteil (20) umfassen, das von einer Steuerstange (2), die in der Gabelstange angeordnet ist, gesteuert wird.

6. Abstell- und Absperrsystem für Fahrräder (1) nach dem vorhergehenden Anspruch, **dadurch gekennzeichnet, dass** im Falle einer elektronischen schlüssellosen Steuerung das Entsperren des Fahrrades aus seiner Abstelleinheit mit einem Mikromotor erfolgt, der die Steuerstange (21) schwenkt.

7. Abstell- und Absperrsystem für Fahrräder (1) nach dem vorhergehenden Anspruch 6 oder 7, **dadurch gekennzeichnet, dass** jeder der beweglichen seitlichen Vorsprünge (6a, 6b) kinematisch mit dem drehbaren Betätigungsteil (20) mit Hilfe einer Stange (19a, 19b) verbunden ist, die schwenkbar auf dem drehbaren Teil montiert ist.

8. Abstell- und Absperrsystem für Fahrräder nach einem der vorhergehenden Ansprüche, **dadurch gekennzeichnet, dass** jeder der Absperrvorsprünge (6a, 6b) in einer Muffe (10a, 10b) gleitend angeordnet ist.

9. Abstell- und Absperrsystem für Fahrräder nach dem vorhergehenden Anspruch, **dadurch gekennzeichnet, dass** jede der Muffen (10a, 10b) einen inneren rohrförmigen Abschnitt (10'), der in dem Gabelkopf (9c) angeordnet ist, und einen äußeren röhrenförmigen Abschnitt (10") umfasst, der über den Gabelkopf hinausragt, und dass durch diesen äußeren rohrförmigen Abschnitt (10") durch Zusammenwirken mit einem Rampensystem das Fahrrad in seine Abstell- und Absperrposition geführt wird.

10. Abstell- und Absperrsystem für Fahrräder nach dem vorhergehenden Anspruch, **dadurch gekennzeichnet, dass** jeder der Absperrvorsprünge Teil eines Absperrbolzens (11a, 11b) ist, der eine zylindrische innere Lagerung (13a, 13b) und eine Bodenwand (14a, 14b) umfasst, wobei in der inneren Lagerung eine Steuerstange (15a, 15b) angeordnet ist, eines deren Enden in dem Absperrbolzen angeordnet ist, und deren anderes Ende über den Absperrbolzen hinausragt, während das in dem Absperrbolzen angeordnete Ende eine zylindrische Führungswand (16a, 16b) und eine Stützfläche (17a, 17b) für eine Druckfeder (18a, 18b) aufweist, deren anderes Ende an einer Bodenwand des entsprechenden Absperrbolzens aufliegt, und dass das Seitenteil der Steuerstange (15a, 15b), die von der zylindrischen Führungswand und der Stützfläche (17a, 17b) gebildet ist, an einem inneren Umfangsanschlag (110) aufliegt.

11. Abstell- und Absperrsystem für Fahrräder nach dem vorhergehenden Anspruch, **dadurch gekennzeichnet, dass** ein Steuerarm (19a, 19b) mit einem seiner Enden um eine Vertikalachse (190) am Ende der Steuerstange, die über den Absperrbolzen hinausragt, und mit dem anderen seiner Enden um eine Vertikalachse (191) am drehbaren Betätigungsteil (20) angelenkt ist.

12. Abstell- und Absperrsystem für Fahrräder nach dem vorhergehenden Anspruch, **dadurch gekennzeichnet, dass** in der aktiven Absperrposition, in der die Absperrvorsprünge herausragen, die beiden Steuerarme entlang der Querachse (X2, X'2) ausgerichtet sind, wodurch die abgesperrte Position durch eine Hebelwirkung gesichert wird, da ein axiales Einwirken auf die Absperrvorsprünge keine Drehung in die Entsperrposition hervorrufen kann.

13. Abstell- und Absperrsystem für Fahrräder nach dem vorhergehenden Anspruch, **dadurch gekennzeichnet, dass** jeder der Absperrbolzen einen beweglichen zentralen Anschlussteil (104a) umfasst, der dazu bestimmt ist, mit einem festen Anschlussteil (107a), der an der Abstelleinheit angeordnet ist, zusammenzuwirken, wobei jeder der festen Anschlussteile mit einer Versorgung verbunden ist, während jeder der beweglichen zentralen Anschlussteile (104a) elektrisch mit einer elektrischen Schaltung des Fahrrades verbunden ist.

14. Abstell- und Absperrsystem für Fahrräder (1) nach einem der vorhergehenden Ansprüche, **dadurch gekennzeichnet, dass** das Fahrrad ein Diebstahlsicherungssystem umfasst, das außerhalb der Station verwendet wird, umfassend Mittel zum Absperren der Lenkung in einer Winkelposition in Bezug zur allgemeinen Ebene (P) des Rahmens.

15. Abstell- und Absperrsystem für Fahrräder (1) nach dem vorhergehenden Anspruch, **dadurch gekennzeichnet, dass** das Diebstahlsicherungssystem, das außerhalb der Station verwendet wird, eine Diebstahlsicherung (24) ist, die von einem Kabel (25) gebildet ist, dessen Ende eine Klemme (27) umfasst, die dazu bestimmt ist, in ein quer verlaufendes Absperrloch einzugreifen, das einerseits in der Lenksäule des Rahmens und andererseits in dem Gabelrohr vorgesehen ist, um hier durch einen Riegel (28) abgesperrt zu werden.
